# EUROPEAN PATENT SPECIFICATION

(11) **EP 2 464 208 B1**
(45) Date of publication and mention of the grant of the patent: **05.06.2013**
(21) Application number: 10733011.0
(22) Date of filing: 20.07.2010
(51) Int. Cl.: A01F 12/44

(54) **COMBINE HARVESTER**
MÄHDRESCHER
MOISSONNEUSE-BATTEUSE

(30) Priority: 14.08.2009 GB 0914222
(43) Date of publication of application: 20.06.2012
(73) Proprietor: Agco A/s, 8900 Randers (DK)
(72) Inventor: SORENSEN, Jakob Bro, DK8960 Randers (DK)
(74) Representative: Marden, David Ian
(86) International application number: PCT/EP2010/060464
(87) International publication number: WO 2011/018308

(56) References cited:
- DE-A1- 19 501 828
- GB-A- 2 051 954

## Description

The invention relates to combine harvesters and particularly to the grain cleaning section thereof which is downstream of threshing apparatus.

For many decades self-propelled combine harvesters have been used by farmers to harvest a wide range of crops including cereals, maize and oil seed rape. Typically, a combine harvester cuts the crop material, threshes the grain therefrom, separates the grain from the straw, and cleans the grain before storing in an onboard tank. Straw and crop residue is ejected from the rear of the machine. A well established means to clean the grain involves dropping the grain on to a reciprocating sieve in combination with directing an air flow across the top surface of the sieve. The grain passes through the sieve whilst the lighter crop residue, or chaff, is carried by the air stream in a generally horizontal direction and expelled. Traditionally the speed of the air flow is controllable so as to allow the operator to expel the chaff without also blowing the grain out of the machine for all crops and operating conditions.

In early machines the air stream was typically generated by a transverse cross-flow fan which extended across the width of the machine and comprised a plurality of impellor blades supported for rotation around a rotation axis within a generally cylindrical fan housing which included an air intake at each axial end. Therefore, air is drawn in from the surrounding environment in an axial direction from each end and propelled radially by the impellor blades into the housing of the cleaning apparatus so as to provide an air flow through the sieve or sieves. Due to the finite width of this transverse fan arrangement the velocity profile of the expelled air stream is non-uniform in the transverse direction wherein the air stream velocity towards the outside edges of the fan is far greater than that experienced towards the centre. Such a non-uniform air stream profile across the sieves is detrimental to the operation of the machine because a constant air speed across the width of the sieve cannot be set thus requiring the operator to make a trade-off between efficient separation and grain loss.

In attempting to produce a more uniform air stream distribution the single transverse fan combine manufacturers have divided the single fan into a plurality of axially aligned fan modules which share a common rotation axis. Each fan module is axially spaced with an interruption in the fan housing between each module. Each gap between the fan modules provides an air intake to allow air to enter each end of all fan modules. The provision of intermediate air intakes reduces the distance between the axial centre of each fan module and the air intakes thereby increasing the uniformity of the air stream velocity profile.

Despite the improvements made by dividing the fan into a number of modules further problems have arisen due to the spacing introduced between adjacent fan modules. Each fan module delivers a sub-stream of air into the cleaning apparatus. The spacing between adjacent fan modules results in a *dead zone* immediately downstream and aligned with the spacing between the modules.

Further downstream the sub-streams merge and, due to aerodynamic forces, a low velocity regions form at the outside edges resulting in a region of increased velocity which is longitudinally aligned with the dead zone disposed further upstream. The irregular air flow velocity profile reduces the efficiency of the cleaning apparatus still requiring the operator to make a trade-off as described above. The problems are compounded by recent developments in the separating apparatus disposed upstream which have capability of delivering very high crop flows. Inadequate performance in the cleaning apparatus presents a bottleneck in the overall harvester wherein the improved separating apparatus cannot be used to maximum effect.

Therefore it is an object of the invention to provide a combine harvester with an improved cleaning apparatus having a more uniform air stream velocity profile.

According to the invention there is provided a combine harvester comprising fan apparatus for generating an air stream through cleaning apparatus for separating chaff from grain, the fan apparatus comprising a plurality of fan modules for generating mutually spaced air sub-streams, wherein the cleaning apparatus comprises an auxiliary air intake located between two adjacent air sub-streams, and means to narrow the passage for each air sub-stream adjacent the auxiliary air intake so as to create a region of lower pressure which draws air directly from the environment into the air stream through the auxiliary air intake.

The inventors have surprisingly found that the introduction of a direct source of air proximate to the dead zone in combination with means to narrow the passage for each air sub stream, significantly improves the transverse uniformity of the air stream velocity profile. The venturi effect is exploited to suck in air directly from the environment, i.e. not passing through the fan apparatus, thus reducing the transverse component of the air stream from each sub stream, in effect producing a more collimated overall air stream. In turn, this increases the transverse uniformity of the air stream velocity profile further downstream. The improvement advantageously allows the operator to employ a higher fan speed without the risk of grain loss in the peak velocity regions. Also, an increased fan speed allows an increased crop flow thus any improved separating apparatus further upstream can be exploited to maximum effect.

Each fan module may comprise a plurality of impellors supported for rotation around a rotation axis within a generally cylindrical fan housing which includes an air intake at each axial end. The rotation axes are preferably axially aligned with respect to one another in a position upstream of the cleaning apparatus. In a preferred arrangement, the rotation axes are substantially aligned transversely across the width of the harvester so that the air stream, when radially expelled, continues in a generally longitudinal direction through the cleaning apparatus with respect to the normal direction of travel of the harvester. Preferably, adjacent fan houses are axially spaced to allow the intake of air into both axial ends of each fan module. Each fan module typically sucks air in from the environment in a generally axial direction and expels the air into the cleaning apparatus in a generally radial direction.

The cleaning apparatus preferably comprises a vibrating sieve which is substantially horizontal and serves to separate the chaff from the grain, both of which are dropped, in a crop flow, towards the sieve, and wherein the air stream passes over the sieve to blow the chaff rearwardly before reaching the sieve.

The auxiliary air intake preferably comprises an orifice formed in the base of the cleaning apparatus. Such an arrangement requires only simple modification to known combines wherein a hole is simply cut into the existing base of the cleaning apparatus housing. The cleaning apparatus may further comprise a pair of vertical plates between the adjacent sub-streams and which converge rearwardly, the plates located either side of the orifice and each including a respective vent to allow air to pass from the orifice into the respective sub-streams.

Preferably the means to narrow the passage for each air sub-stream comprise venturi baffle plates which are substantially vertical and reduce the transverse width of each sub-stream in the rearward direction. Advantageously, the baffle plates provide a simple mechanism to narrow the passage for the respective sub-streams thereby producing the desired region of lower pressure due to the venturi effect. It is envisaged that alternative means may be employed to narrow the sub-stream passage so as to exploit the venturi effect.

In a preferred arrangement the combine harvester comprises two or three fan modules and an auxiliary air intake between adjacent pairs of fan modules, each air intake having associated therewith a respective set of venturi baffle plates. The provision of three axially aligned fan modules results in two dead regions which have an associated auxiliary air intake in accordance with the invention. It is envisaged also that the fan apparatus may comprise four or even more fan modules.

The cleaning apparatus may further comprise at least one transverse deflector plate downstream of the fan apparatus to vertically direct the air stream expelled thereby. Advantageously, this allows the operator to fine tune the profile of the expelled air steam and particularly the height at which the air stream is directed within the cleaning apparatus.

Further advantages of the invention will become apparent from the following description of a specific embodiment with reference to the appended drawings in which:-
- Figure 1: is a sectional view through part of a combine harvester;
- Figure 2: is a sectional view through fan apparatus and cleaning apparatus in accordance with the invention;
- Figure 3: is an underside isometric view of part of the fan apparatus and cleaning apparatus of Figure 2 showing a section through the left-hand fan module;
- Figure 4: is an upper isometric view of the apparatus shown in Figure 3;
- Figure 5': is a plan view of part of the fan apparatus and cleaning apparatus of Figure 2; and,

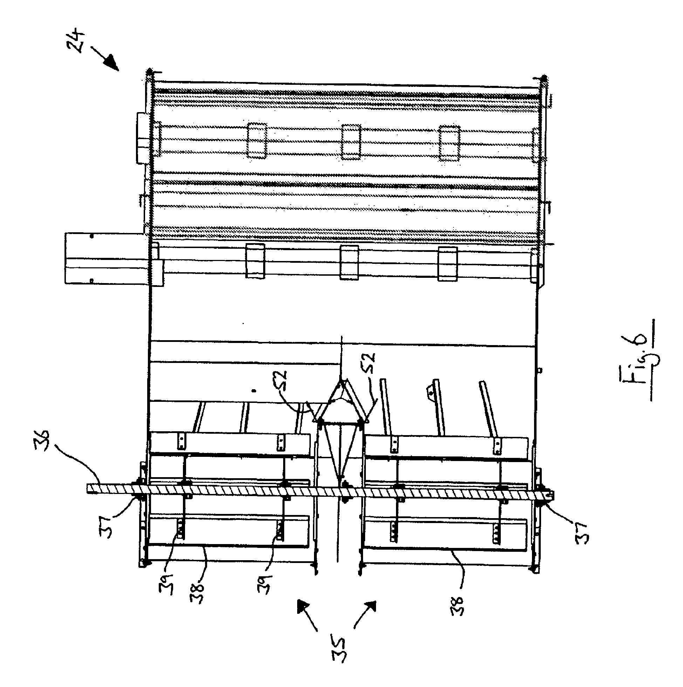

- Figure 6: is a plan view of the fan apparatus and cleaning apparatus of Figure 2.

From reading the following description it should be understood that the terms *longitudinal* and *transverse* are made in relation to the combine harvester's normal direction of travel. In other words, the term *longitudinal* equates to the fore and aft direction, whereas the term *transverse* equates to the crosswise direction, or left and right. Furthermore, the terms *axial* and *radial* are made in relation to a rotating body such as a shaft wherein *axial* equates to a direction along the rotation axis and *radial* equates to a direction perpendicular to the rotation axis.

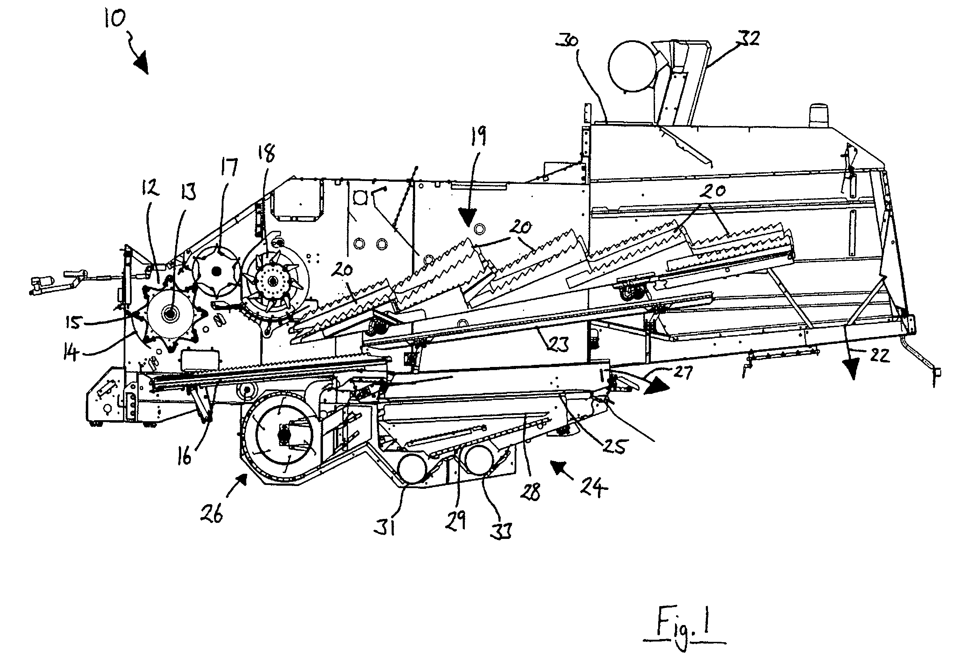

With reference to Figure 1 a combine harvester 10 comprises a header (not shown) which cuts a crop as the harvester 10 is driven across a field. The crop is conveyed by an elevator (also not shown) in to a threshing drum, referenced generally at 12. The threshing drum 12 rotates on a transverse axis 13 within drum housing 14. Threshing bars 15 thresh the grain from the head of each plant and a portion of the grain falls on to a reciprocating grain pan 16. The remaining grain and bulk crop material is conveyed rearwardly by transverse transfer cylinders 17,18 into separating apparatus referenced generally at 19.

The separating apparatus shown comprise five sets of straw walkers 20, each set comprising typically six straw walker elements which are disposed side-by-side across the width of the combine 10. The inclined straw walkers 20 oscillate so as to convey the crop material rearwardly wherein the motion causes the grain to fall through holes in the base of each straw walker 20. The straw is expelled from the combine harvester 10 through the machine as indicated by arrow 22. The grain which falls through the straw walkers 20 is collected by inclined grain pan 23 which moves the grain through gravity in a forward direction and onto grain pan 16.

Although the separating apparatus 19 shown comprises a series of straw walkers 20, the invention is equally applicable to a combine harvester having separator apparatus based on the axial flow separation principle wherein an axial rotor, or rotors, is employed to separate the grain from the straw.

The collected grain is conveyed rearwardly by the oscillation motion of the grain pan 16 into a cleaning shoe referenced generally at 24. The grain cascades from the rear of pan 16 onto the surface of a first upper sieve 25. Fan apparatus, referenced generally at 26 produces an air stream which passes through upper sieve 25 to propel straw and chaff from the rear of the machine as referenced by arrow 27. The grain falls through upper sieve 25 on to a lower, finer, sieve 28. Similarly, the fan apparatus 26 delivers an air stream through lower sieve 28 to carry chaff and straw residue rearwardly. The grain which falls through lower sieve 28 is collected on grain pan 29 and conveyed to the grain tanks 30 via an auger 31 and elevator 32.

The chaff and straw residue which falls from the rear of lower sieve 28 is conveyed forwardly to an auger 33 and onto re-threshing mechanism (not shown) before being passed back into the crop stream to be re-cleaned.

The invention relates to the fan apparatus 26 and particularly to the generation of the air stream which passes through the lower sieve 28 and upper sieve 25.

The fan apparatus 26 comprises a pair of fan modules 35 which are arranged side-by-side and share a common transverse shaft 36. The transverse fan shaft 36 is supported by bearings 37 which are fixed to the frame of the combine. Each fan module 35 includes a set of impellor blades which are supported on the fan shaft 36 by a respective pair of spokes 39. The circumferential surface of the generally cylindrical swept envelope of the impellor blades 38 is covered by fan housing 40 which extends across the width of the machine. The fan housing 40 is open on its rear side to allow the air stream generated by the impellor blades 38 to pass into housing 42 of the cleaning shoe 24. Furthermore, the underside of the fan housing 40 is discontinuous in the region between the two fan modules 35 thereby providing an intermediate air inlet 44.

The fan shaft 36 is driven by means of a belt and pulley system (not shown) which causes air to be drawn in at each end of the fan housing 40 and through the intermediate gap 44. Each fan module 35 propels a respective sub-stream radially and rearwardly into the cleaning shoe 24.

A pair of vertical plates 46 are fixed to the base 48 of the cleaning shoe 24 immediately downstream of the fan housing 40 and converge in a rearward direction so as to be secured to one another. The vertical plates 46 serve to define the boundaries of the passage way for each sub-stream. A central vertical vane 49 is secured to the convergent point of the vertical plates 46 and serves to maintain separation between the two sub-streams.

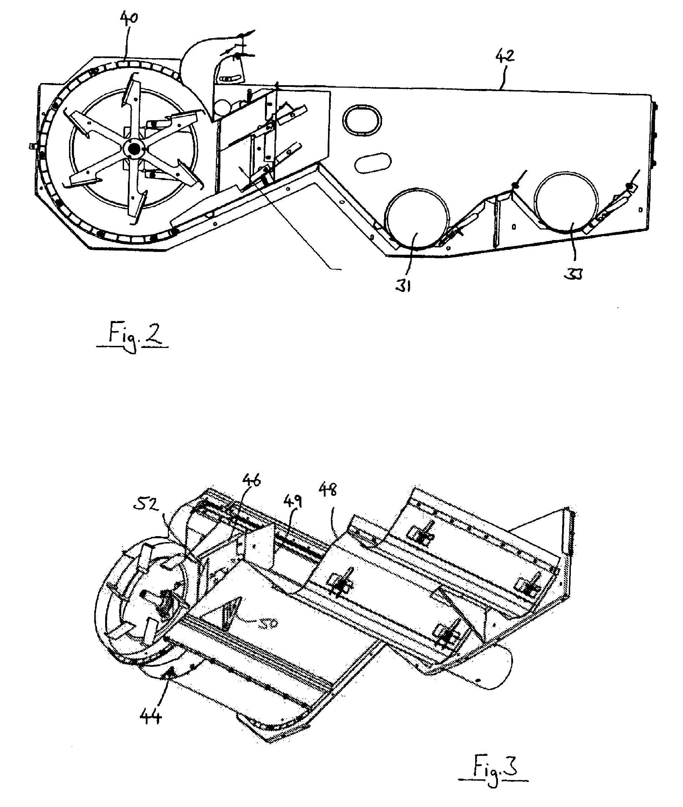

With reference to Figure 3, a triangular hole 50 is formed in the base of the cleaning shoe 48 immediately behind the fan apparatus 26 and between the vertical plates 46.

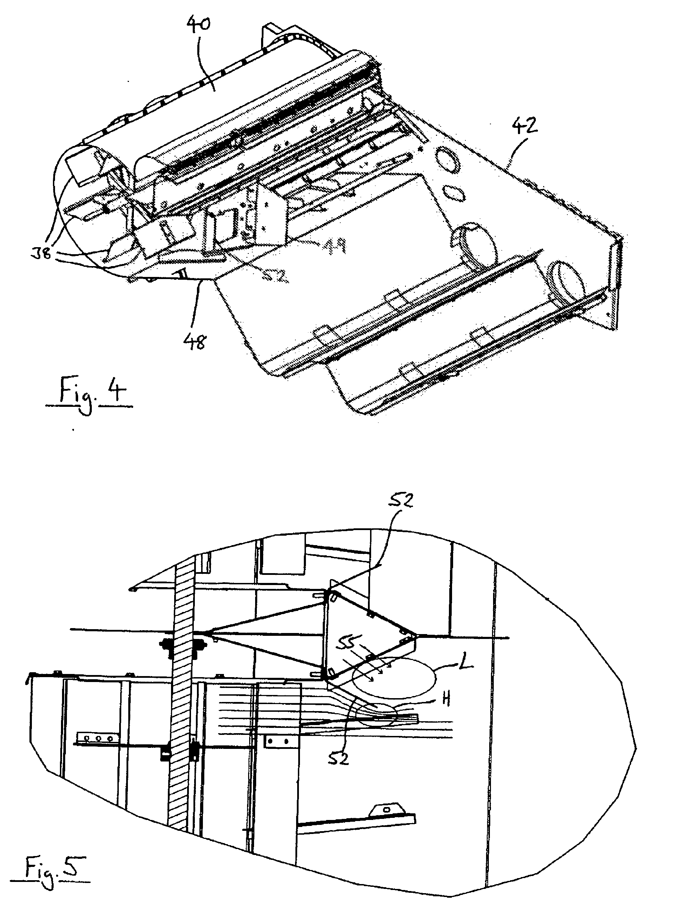

Vertical baffle plates 52 are positioned immediately downstream of each fan module 35 and serve to narrow the passage for each sub-stream in the transverse direction at the edge adjacent the intermediate gap 44. As is shown in Figure 5, the narrowing of the passage creates a higher velocity region H caused by the venturi effect wherein the sub-stream is forced around the baffle plates 52. The high velocity region H lowers the pressure in the vicinity and creates a low pressure region L. The low pressure region L serves to draw in air through auxiliary orifice 50 directly from the environment as referenced by arrows 55. This effect is mirrored on both left and right sides in the region between the two fan modules 35. The combination of an auxiliary air intake 50 and baffle plates 52 exploits the venturi effect to deliver a more uniform air stream velocity profile across the width and depth of the cleaning shoe 24. The introduction of a direct air source in between the two sub-streams generated by the respective fan modules 35 serves to reduce any transverse component of the sub-stream direction in which, without the auxiliary air source, the two sub-streams would merge deep within the cleaning shoe 24 thereby creating undesirable peaks and troughs. The collimated air flow through the cleaning shoe 24 allows an operator greater flexibility in operating at higher fan speeds thereby improving the throughput of the cleaning shoe 24 and thus the overall combine.

From reading the present disclosure, other modification will be apparent to persons skilled in the art. Such modifications may involve other features which are already known in the field of combine harvesters and component parts therefore and which may be used instead of or in addition to features already described herein.

## Claims

1. A combine harvester comprising fan apparatus for generating an air stream through cleaning apparatus to separate chaff from grain, the fan apparatus comprising a plurality of fan modules for generating mutually spaced air sub-streams which merge downstream within the cleaning apparatus, wherein the cleaning apparatus comprises an auxiliary air intake located between two adjacent air sub-streams, and means to narrow the passage for each air sub-stream adjacent the auxiliary air intake so as to create a region of lower pressure which draws air directly from the environment into the air stream through the auxiliary air intake.

2. A combine harvester according to Claim 1, wherein each fan module comprising a plurality of impellors supported for rotation around a rotation axis within a generally cylindrical fan housing which includes an air intake at each axial end.

3. A combine harvester according to Claim 2, wherein the respective rotation axes are substantially axially aligned with respect to one another upstream of the cleaning apparatus.

4. A combine harvester according to Claim 2 or 3, wherein the rotation axes are substantially aligned transversely across the width of the harvester and the air stream through the cleaning apparatus is generally longitudinal.

5. A combine harvester according to Claim 2, 3 or 4, wherein each fan housing is axially spaced to allow the intake of air into both axial ends of each fan module.

6. A combine harvester according to any one of Claims 2 to 5, wherein each fan module sucks air in from the environment in a generally axial direction and expels the air into the cleaning apparatus in a generally radial direction.

7. A combine harvester according to any preceding claim, wherein the cleaning apparatus comprises a vibrating sieve which is substantially horizontal and serves to separate the chaff from the grain, both of which are dropped in a crop flow towards the sieve, and wherein the air stream passes over the sieve to blow the chaff rearwardly before reaching the sieve.

8. A combine harvester according to any preceding claim, wherein the auxiliary air intake comprises an orifice formed in the base of the cleaning apparatus.

9. A combine harvester according to Claim 8, wherein the cleaning apparatus further comprise a pair of vertical plates between the adjacent sub-streams and which converge rearwardly, the plates located either side of the orifice and each including a respective vent to allow air to pass from orifice into the respective sub-streams.

10. A combine harvester according to any preceding claim, wherein the means to narrow the passage for each air sub-stream comprise baffle plates which are substantially vertical and rearwardly reduce the transverse width of each sub-stream.

11. A combine harvester according to any preceding claim, comprising three fan modules and an auxiliary air intake between adjacent pairs of fan modules, each air intake having associated therewith a respective set of venturi baffle plates.

12. A combine harvester according to any preceding claim, wherein the cleaning apparatus further comprises at least one transverse deflector plate downstream of the fan apparatus to vertically direct the air stream expelled thereby.

## Patentansprüche

1. Mähdrescher mit einer Ventilator-Einrichtung zur Erzeugung eines Luftstroms durch eine Reinigungs-Einrichtung zum Trennen von Spreu von Körnern, wobei die Ventilator-Einrichtung mehrere Ventilator-Module besitzt zur Erzeugung voneinander beabstandeter Luft-Teilströme, welche sich stromabwärts in der Reinigungs-Einrichtung vereinigen, und wobei die Reinigungs-Einrichtung einen Hilfs-Lufteinlass aufweist, der zwischen zwei benachbarten Luft-Teilströmen angeordnet ist, und mit einem Organ zur Verengung des Durchtritts für jeden Luft-Teilstrom benachbart dem Hilfs-Lufteinlass zur Schaffung eines Bereichs mit geringerem Druck, der Luft durch den Hilfs-Lufteinlass direkt aus der Umgebung in den Luftstrom saugt.

2. Mähdrescher nach Anspruch 1, wobei jedes Ventilator-Modul mehrere Lüfterräder aufweist, die geeignet für eine Rotation um eine Rotationsachse in einem grundsätzlich zylindrischen Ventilator-Gehäuse, welches an jedem axialen Ende einen Lufteinlass aufweist, abgestützt sind.

3. Mähdrescher nach Anspruch 2, wobei die jeweiligen Rotationsachsen stromaufwärts der Reinigungs-Einrichtung im Wesentlichen axial zueinander ausgerichtet sind.

4. Mähdrescher nach Anspruch 2 oder 3, wobei die Rotationsachsen im Wesentlichen transversal über die Breite des Mähdreschers angeordnet oder zueinander fluchten, wobei der Luftstrom durch die Reinigungs-Einrichtung grundsätzlich in Längsrichtung verläuft.

5. Mähdrescher nach Anspruch 2, 3 oder 4, wobei jedes Ventilator-Gehäuse axial beabstandet ist, um einen Einlass von Luft in beide axialen Enden jedes Ventilator-Moduls zu ermöglichen.

6. Mähdrescher nach einem der Ansprüche 2 bis 5, wobei jedes Ventilator-Modul aus der Umgebung Luft in eine im Wesentlichen axiale Richtung einsaugt und Luft in eine grundsätzlich radiale Richtung in die Reinigungs-Einrichtung herausfördert.

7. Mähdrescher nach einem der vorhergehenden Ansprüche, wobei die Reinigungs-Einrichtung ein Vibrations-Sieb aufweist, welches im Wesentlichen horizontal angeordnet ist und dem Trennen des Spreus von Körnern dient, wobei Spreu und Körner in einem Erntegut-Fluss in Richtung des Siebs fallen und wobei der Luftstrom über das Sieb strömt zum Blasen des Spreus nach hinten oder rückwärts vor Erreichen des Siebs.

8. Mähdrescher nach einem der vorhergehenden Ansprüche, wobei der Hilfs-Lufteinlass eine Öffnung, Blende oder Düse aufweist, die in der Basis der Reinigungseinrichtung gebildet ist.

9. Mähdrescher nach Anspruch 8, wobei die Reinigungs-Einrichtung zwischen den beabstandeten Luft-Teilströmen ein Paar vertikaler Platten aufweist, welche nach hinten konvergieren, wobei die Platten auf beiden Seiten der Öffnung, Blende oder Düse angeordnet sind und jeweils eine zugeordnete Entlüftung aufweisen, um ein Strömen von Luft von der Öffnung, Blende oder Düse in die jeweiligen Luft-Teilströme zu ermöglichen.

10. Mähdrescher nach einem der vorhergehenden Ansprüche, wobei das Organ zur Verengung des Durchtritts jedes Luft-Teilstroms Ablenkplatten aufweist, welche im Wesentlichen vertikal orientiert sind und nach hinten die transversale Breite jedes Luft-Teilstroms reduzieren.

11. Mähdrescher nach einem der vorhergehenden Ansprüche mit drei Ventilator-Modulen und einem Hilfs-Lufteinlass zwischen benachbarten Paaren von Ventilator-Modulen, wobei jedem Lufteinlass ein Satz von Venturi-Ablenkplatten zugeordnet ist.

12. Mähdrescher nach einem der vorhergehenden Ansprüche, wobei die Reinigungs-Einrichtung stromabwärts der Ventilator-Einrichtung zumindest eine transversale Ablenkplatte aufweist, die dem vertikalen Führen, Leiten oder Umlenken des Luftstroms dient, welcher hiermit herausgestoßen oder gefördert wird.

## Revendications

1. Moissonneuse-batteuse comprenant un appareil formant ventilateur pour générer un courant d'air à travers un appareil de nettoyage pour séparer la balle du grain, l'appareil formant ventilateur comprenant une pluralité de modules ventilateurs pour générer des courants d'air secondaires mutuellement espacés qui convergent en aval à l'intérieur de l'appareil de nettoyage, dans laquelle l'appareil de nettoyage comprend une admission d'air auxiliaire située entre deux courants d'air secondaires adjacents, et des moyens pour rétrécir le passage pour chaque courant d'air secondaire adjacent à l'admission d'air auxiliaire afin de créer une région de pression inférieure qui attire l'air directement de l'environnement dans le courant d'air à travers l'admission d'air auxiliaire.

2. Moissonneuse-batteuse selon la revendication 1, dans laquelle chaque module ventilateur comprend une pluralité de roues supportées pour tourner autour d'un axe de rotation à l'intérieur d'un logement de ventilateur généralement cylindrique qui comprend une admission d'air à chaque extrémité axiale.

3. Moissonneuse-batteuse selon la revendication 2, dans laquelle les axes de rotation respectifs sont sensiblement axialement alignés l'un par rapport à l'autre en amont de l'appareil de nettoyage.

4. Moissonneuse-batteuse selon la revendication 2 ou 3, dans laquelle les axes de rotation sont sensiblement alignés transversalement sur la largeur de la moissonneuse, et le courant d'air à travers l'appareil de nettoyage est généralement longitudinal.

5. Moissonneuse-batteuse selon la revendication 2, 3 ou 4, dans laquelle chaque logement de ventilateur est espacé axialement pour permettre l'admission d'air dans les deux extrémités axiales de chaque module ventilateur.

6. Moissonneuse-batteuse selon l'une quelconque des revendications 2 à 5, dans laquelle chaque module ventilateur aspire de l'air de l'environnement dans une direction généralement axiale, et expulse l'air dans l'appareil de nettoyage dans une direction généralement radiale.

7. Moissonneuse-batteuse selon l'une quelconque des revendications précédentes, dans laquelle l'appareil de nettoyage comprend un tamis vibrant qui est sensiblement horizontal et sert à séparer la balle du grain, les deux tombant dans un flux de récolte vers le tamis, et dans laquelle le courant d'air passe sur le tamis pour chasser la balle vers l'arrière avant qu'elle atteigne le tamis.

8. Moissonneuse-batteuse selon l'une quelconque des revendications précédentes, dans laquelle l'admission d'air auxiliaire comprend un orifice formé dans la base de l'appareil de nettoyage.

9. Moissonneuse-batteuse selon la revendication 8, dans laquelle l'appareil de nettoyage comprend en outre une paire de plaques verticales entre les courants secondaires adjacents et qui convergent vers l'arrière, les plaques étant situées d'un côté et de l'autre de l'orifice et comprenant chacune un évent respectif pour permettre à l'air de passer depuis l'orifice dans les courants d'air secondaires respectifs.

10. Moissonneuse-batteuse selon l'une quelconque des revendications précédentes, dans laquelle les moyens pour rétrécir le passage de chaque courant d'air secondaire comprennent des chicanes qui sont sensiblement verticales et réduisent vers l'arrière la largeur transversale de chaque courant secondaire.

11. Moissonneuse-batteuse selon l'une quelconque des revendications précédentes, comprenant trois modules de ventilateur et une admission d'air auxiliaire entre les paires adjacentes de modules de ventilateur, chaque admission d'air ayant un ensemble respectif de chicanes venturi qui lui est associé.

12. Moissonneuse-batteuse selon l'une quelconque des revendications précédentes, dans laquelle l'appareil de nettoyage comprend en outre au moins un déflecteur transversal en aval de l'appareil formant ventilateur pour diriger verticalement le courant d'air ainsi expulsé.
